(19)

**Europäisches Patentamt**
**European Patent Office**
**Office européen des brevets**

(11) **EP 4 718 380 A1**

(12) **EUROPEAN PATENT APPLICATION**

(43) Date of publication:
**01.04.2026  Bulletin 2026/14**

(21) Application number: **25205122.2**

(22) Date of filing: **26.09.2025**

(51) International Patent Classification (IPC):
**G06T 7/11** (2017.01)      **G06T 7/174** (2017.01)
**G06V 10/82** (2022.01)      **G06V 20/64** (2022.01)

(52) Cooperative Patent Classification (CPC):
**G06T 7/11; G06T 7/174; G06V 10/82; G06V 20/64;**
G06T 2207/10028; G06T 2207/20084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **27.09.2024  CN 202411365003
01.08.2025  KR 20250105967**

(71) Applicants:
• **Samsung Electronics Co., Ltd.**
**Suwon-si, Gyeonggi-do 16677 (KR)**
• **Xi'an Jiaotong University**
**Xi'an, Shaanxi 710049 (CN)**

(72) Inventors:
• **WANG, Haoxuan**
**Xi'an, 710049 (CN)**
• **CHEN, Shuaijia**
**Xi'an, 710049 (CN)**

• **LIAO, Zhimin**
**Xi'an, 710049 (CN)**
• **GUO, Zidong**
**Xi'an, 710000 (CN)**
• **WANG, Jiayang**
**Xi'an, 710000 (CN)**
• **XU, Han**
**Xi'an, 710000 (CN)**
• **YANG, Ran**
**Xi'an, 710000 (CN)**
• **LEE, Dongwook**
**16678 Suwon-Si (KR)**
• **JI, Dae Hyun**
**16678 Suwon-Si (KR)**
• **JEON, Paulbarom**
**16678 Suwon-Si (KR)**

(74) Representative: **Arnold & Siedsma**
**Bezuidenhoutseweg 57**
**2594 AC The Hague (NL)**

(54) **METHOD AND DEVICE WITH SEMANTIC SEGMENTATION OF POINT CLOUD DATA**

(57)      A semantic segmentation method based on point cloud data and a device using the same are provided. The method includes generating an input feature corresponding to input point cloud data, generating a global feature by performing global feature extraction based on the input feature, generating a bird's eye view (BEV) feature by compressing the global feature in a depth direction corresponding to the BEV, generating a merged feature by merging the global feature with the BEV feature, and generating a semantic segmentation result for the input point cloud data based on the merged feature.

```
                    Start

Generate input feature corresponding to input point cloud data      ~110

Generate global feature by performing global feature extraction
            based on input feature                                  ~120

Generate BEV feature by compressing global feature in depth direction  ~130

Generate merged feature by merging global feature with BEV feature   ~140

Generate semantic segmentation result for input point cloud data
            based on merged feature                                 ~150

                     End
```

**FIG. 1**

EP 4 718 380 A1

# Description

<u>Background</u>

1. Field

The following embodiments relate to a method and device with semantic segmentation of point cloud data.

2. Description of Related Art

Three-dimensional (3D) semantic segmentation of point clouds may be divided into a point cloud-based method, an image-based method, and a multimodality-based method depending on the modality of input data. Point cloud data may be obtained by a light detection and ranging (LiDAR) sensor or radar, for example. Cloud data may be a set of coordinates of 3D points representing a specific scene or geometric information of an object.

Methods for semantic segmentation of point cloud data may be generally divided into point-based methods, projection-based methods, and voxel-based methods. With point-based methods, the recognition accuracy of a semantic segmentation model is improved by learning the correlation of neighboring points using a point feature and a position feature. With projection-based methods, after converting the point cloud data into a bird's eye view (BEV), feature extraction and processing may be performed on BEV data using a two-dimensional (2D) neural network, and the result thereof may be reflected in a 3D space. With voxel-based methods, a 3D space may be segmented into uniform and nonuniform voxel blocks, and feature extraction and prediction may be performed using sparse convolution.

<u>Summary</u>

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a processor-implemented semantic segmentation method includes: generating an input feature corresponding to input point cloud data; generating a global feature by performing global feature extraction based on the input feature; generating a bird's eye view (BEV) feature by compressing the global feature in a depth direction corresponding to the BEV; generating a merged feature by merging the global feature with the BEV feature; and generating a semantic segmentation result for the input point cloud data based on the merged feature.

The method may further include: generating a downsampled feature by performing a downsampling process by a first preset number of times on the input feature; and generating an upsampled feature by performing an upsampling process by a second preset number of times on the merged feature, wherein the first and second preset numbers are the same or are different, wherein the generating of the global feature includes generating the global feature by performing global feature extraction based on the downsampled feature, and the generating of the semantic segmentation result includes generating the semantic segmentation result based on the upsampled feature.

Downsampling results generated by the downsampling processes may be used to generate an upsampling result among the performances of the upsampling process.

A first performance of the downsampling process performances may include: extracting a first local feature from the input feature using a first spatial aggregation convolution layer that includes convolution layers having different kernel sizes; extracting a first global feature from the first local feature using a first transformer layer; and generating a first downsampling result from the first global feature using a first downsampling layer.

The extracting of the first local feature may include: extracting a first intermediate feature from the input feature using a first convolution kernel; extracting a first sub-intermediate feature from the first intermediate feature using a first sub-convolution kernel; extracting a second sub-intermediate feature from the first intermediate feature using a second sub-convolution kernel; extracting a third sub-intermediate feature from the first intermediate feature using a third sub-convolution kernel; and determining the first local feature based on the first intermediate feature, the first sub-intermediate feature, the second sub-intermediate feature, and the third sub-intermediate feature.

The first sub-convolution kernel, the second sub-convolution kernel, and the third sub-convolution kernel may be determined by disassembling a second convolution kernel that has a different size from the first convolution kernel, into longitudinal, width, and depth directions that are orthogonal to each other.

The generating of the global feature based on the downsampled feature may include: extracting a second local feature from the downsampled feature using a second spatial aggregation convolution layer including convolution layers having different kernel sizes; and extracting the global feature from the second local feature using a second transformer layer.

The generating of the BEV feature may include generating the BEV feature by extracting maximum values in the depth direction from the global feature.

The global feature may be a three-dimensional (3D) feature, and the BEV feature may be a two-dimensional (2D) feature.

Generating the merged feature may include merging the global feature with the BEV feature using a first fully-connected layer; generating the merged feature includes processing the BEV feature using a second fully-connected layer, performing pointwise multiplication between the global feature and a result of the processing, and adding a result of the pointwise multiplication to the global feature; or generating the merged feature includes applying a predefined deformation function to the global feature and the BEV feature.

In another general aspect, a non-transitory computer-readable storage medium storing one or more programs including instructions, wherein the instructions, when individually or collectively executed by at least one processor, cause the at least one processor to: generate an input feature corresponding to input point cloud data; generate a global feature by performing global feature extraction based on the input feature; generate a bird's eye view (BEV) feature by compressing the global feature in a depth direction corresponding to the BEV; generate a merged feature by merging the global feature with the BEV feature; and generate a semantic segmentation result for the input point cloud data based on the merged feature.

In another general aspect, an electronic device includes: one or more processors including circuitry; and memory storing instructions, wherein the instructions, when executed by the one or more processors, cause the electronic device to: generate an input feature corresponding to input point cloud data, generate a global feature by performing global feature extraction based on the input feature, generate a bird's eye view (BEV) feature by compressing the global feature in a depth direction corresponding to the BEV, generate a merged feature by merging the global feature with the BEV feature, and generate a semantic segmentation result for the input point cloud data based on the merged feature.

The instructions, when executed by the one or more processors, may further cause the electronic device to: generate a downsampled feature by performing a downsampling process by a first preset number of times on the input feature, and generate an upsampled feature by performing an upsampling process by a second preset number of times on the merged feature, wherein the first and second preset numbers are the same or are different.

Downsampling results generated by the performances of the downsampling process are used to generate an upsampling result among the performances of the upsampling process.

The instructions, when executed by the one or more processors, to perform a first downsampling process of the downsampling processes, may cause the electronic device to: extract a first local feature from the input feature using a first spatial aggregation convolution layer that includes convolution layers having different kernel sizes, extract a first global feature from the first local feature using a first transformer layer, and generate a first downsampling result from the first global feature using a first downsampling layer.

The instructions, when executed by the one or more processors, to extract the first local feature, may cause the electronic device to: extract a first intermediate feature from the input feature using a first convolution kernel, extract a first sub-intermediate feature from the first intermediate feature using a first sub-convolution kernel, extract a second sub-intermediate feature from the first intermediate feature using a second sub-convolution kernel, extract a third sub-intermediate feature from the first intermediate feature using a third sub-convolution kernel, and determine the first local feature based on the first intermediate feature, the first sub-intermediate feature, the second sub-intermediate feature, and the third sub-intermediate feature.

The first sub-convolution kernel, the second sub-convolution kernel, and the third sub-convolution kernel may be determined by disassembling a second convolution kernel that has a different size from the first convolution kernel, into longitudinal, width, and depth directions that are orthogonal to each other.

The instructions, when executed by the one or more processors, to generate the global feature based on the downsampled feature, may cause the electronic device to: extract a second local feature from the downsampled feature using a second spatial aggregation convolution layer including convolution layers having different kernel sizes, and extract the global feature from the second local feature using a second transformer layer.

The instructions, when executed by the one or more processors, to generate the BEV feature, may cause the electronic device to: generate the BEV feature by extracting maximum values in the depth direction from the global feature.

The instructions, when executed by the one or more processors, may cause the electronic device to: generate the merged feature by merging the global feature with the BEV feature using a first fully-connected layer, generate the merged feature by processing the BEV feature using a second fully-connected layer, performing pointwise multiplication between the global feature and a result of the processing, and adding a result of the pointwise multiplication to the global feature, or generate the merged feature by applying a predefined deformation function to the global feature and the BEV feature.

Other features and aspects will be apparent from the following detailed description, the drawings, and the claims.

Brief description of the drawings

FIG. 1 illustrates an example of operations of a semantic segmentation method based on point cloud data, according to one or more embodiments.

FIG. 2 illustrates an example of a semantic segmentation method, according to one or more embodiments.

FIG. 3 illustrates an example of operations of a downsampling process, according to one or more embodiments.

FIG. 4 illustrates an example of operations of a spatial aggregation process, according to one or more embodiments.

FIG. 5 illustrates an example of a data processing process of a spatial aggregation process, according to one or more embodiments.

FIG. 6 illustrates an example of operations of a feature merging process, according to one or more embodiments.

FIG. 7 illustrates an example of a feature merging process, according to one or more embodiments.

FIG. 8 illustrates an example of linked processing of a downsampling process and an upsampling process, according to one or more embodiments.

FIG. 9 illustrates an example of detailed linked processing of a downsampling process and an upsampling process, according to one or more embodiments.

FIG. 10 illustrates an example of training operations of a semantic segmentation model, according to one or more embodiments.

FIG. 11 illustrates an example of a configuration of an electronic device, according to one or more embodiments.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

Detailed description

The following detailed description is provided to assist the reader in gaining a comprehensive understanding of the methods, apparatuses, and/or systems described herein. However, various changes and modifications of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

At least some functions of a device (e.g., an electronic device) or method provided in one or more embodiments may be implemented by an artificial intelligence (AI) model. For example, at least one of various modules of the device or method may be implemented by an AI model. An AI-related function may be performed by non-volatile memory, volatile memory, or a processor.

The processor may include one or more processors. The one or more processors may include a general-purpose processor (e.g., a central processing unit (CPU), an application processor (AP), etc.) and/or an auxiliary processor (e.g., a graphics processing unit (GPU), a neural processing unit (NPU), an AI accelerator, a visual processing unit (VPU), etc.) The one or more processors may process input data using a predefined operating rule or an AI model stored in the non-volatile memory or volatile memory.

The predefined operating rule or the AI model may be provided by pre-training. Pre-training may be obtaining an AI model having a desired feature or a predefined operating rule by applying a training algorithm to big training data. The training algorithm may include supervised learning, unsupervised learning, semi-supervised learning, and/or reinforcement learning, but is not limited thereto. The training may be performed by the device in one or more embodiments itself, in which AI is performed, and/or may be implemented by a separate server, device, and/or system.

The AI model may include neural network layers. Each layer may implement a neural network operation by computing weighted connections between a current layer and input data (e.g., a computation result of a previous layer and/or input data to the AI model) of the layer. For example, the neural network may be/include a convolutional neural network (CNN), a deep neural network (DNN), a recurrent neural network (RNN), a restricted Boltzmann machine (RBM), a deep belief network (DBN), a bidirectional recurrent DNN (BRDNN), a generative adversarial network (GAN), or a deep Q-network (DQN), but is not limited thereto.

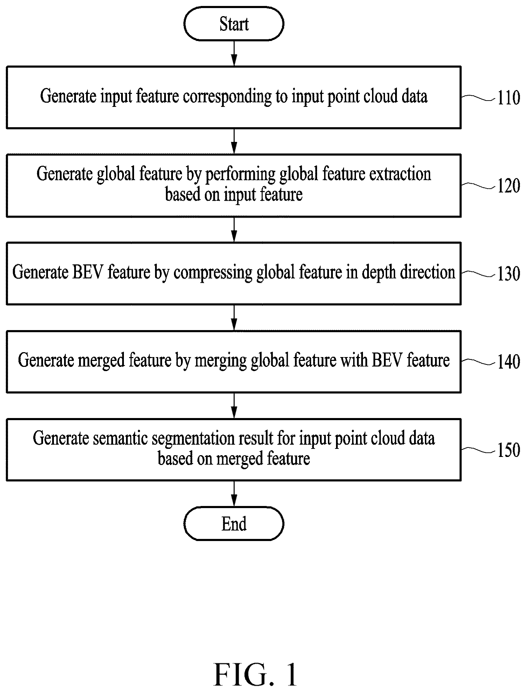

FIG. 1 illustrates an example of operations of a semantic segmentation method based on point cloud data, according to one or more embodiments. Referring to FIG. 1, in operation 110, an electronic device may generate an input feature corresponding to input point cloud data. According to one or more embodiments, the electronic device may obtain point cloud data using three-dimensional (3D) scanning equipment (e.g., light detection and ranging (LiDAR), a stereo camera, a time-of-flight (ToF) camera, etc.). The point cloud data may be in the form of, for example, one vector set in a 3D coordinate system. Typically, the vectors may be expressed in a 3D coordinate format using the X, Y, and Z-axes and may represent the appearance of a specific object.

According to one or more embodiments, the electronic device may generate voxel data of voxels by voxelizing the point cloud data and may generate an input feature by extracting a feature from the voxel data, but examples are not limited thereto. In this case, the electronic device may segment a continuous space represented by the point cloud data into regular cuboids. Each cuboid may correspond to one voxel.

Each point in the point cloud data may be assigned to a corresponding voxel according to 3D coordinates of the point (e.g., voxels contain 3D points of the point cloud). In a voxel, a label of a point therein may be randomly selected and its label applied to the corresponding voxel. Labels of other points of the corresponding voxel may be discarded. As a result, points in the same voxel may have the same label. The electronic device may obtain a semantic segmentation result by executing a pre-trained neural semantic segmentation model (e.g., a neural network-based semantic segmentation model) based on the voxel data.

According to one or more embodiments, the electronic device may generate an input feature by mapping the voxel data to a high-dimensional feature space (high dimension relative to the voxel data) by performing feature extraction based on the neural network. According to one or more embodiments, the neural network may include one or more convolutional layers, one or more normalization layers, and one or more activation function layers. For example, the neural network may include a stem neural network (described later), but is not limited thereto.

In operation 120, the electronic device may generate a global feature by performing global feature extraction based on an input feature. For example, the electronic device may perform global feature extraction based on a downsampled feature corresponding to the input feature, but is not limited thereto. A downsampling process to generate a downsampled feature is described later.

According to one or more embodiments, the electronic device may perform global feature extraction using a neural global feature extraction network including one or more spatial aggregation convolution layers and/or transformer layers, but is not limited thereto. The spatial aggregation convolution layer may be a dynamic spatial aggregation convolution layer. The spatial aggregation convolution layer may include convolutional layers having different respective kernel sizes. The spatial aggregation convolution is described later. The transformer layer may include one or more attention layers and one or more multilayer perceptron (MLP) layers. The attention layer may provide an attention mechanism.

According to one or more embodiments, the electronic device may extract a local feature from the downsampled feature using the spatial aggregation convolution layer (which includes the convolutional layers having different kernel sizes) and may extract a global feature from the local feature using the transformer layer, but is not limited thereto. Alternatively, two or more spatial aggregation convolution layers may be used. For example, the electronic device may extract a first local feature from input data (e.g., the downsampled feature) using a first spatial aggregation convolution layer, may extract a second local feature from the first local feature using a second spatial aggregation convolution layer, and may extract a global feature from the second local feature using the transformer layer, but is not limited thereto.

In operation 130, the electronic device may generate a bird's eye view (BEV) feature by compressing the global feature in a given direction (e.g., depth or z direction) corresponding to the BEV. According to one or more embodiments, 3D data (e.g., a 3D feature) may be expressed in a length direction of the X-axis, a width direction of the Y-axis, and a depth direction of the Z-axis. The electronic device may compress the global feature in the depth direction by performing a densification process based on the 3D global feature and/or a process to obtain maximum values in the depth direction, but is not limited thereto. For example, the electronic device may generate the BEV feature by extracting the maximum values in the depth direction from the global feature. According to the compression in the depth direction, the 3D global feature may be converted into a 2D BEV feature.

In operation 140, the electronic device may generate a merged feature by merging the global feature with the BEV feature. The electronic device may merge the global feature with the BEV feature in various manners. For example, the electronic device may merge the global feature with the BEV feature using an operation such as concatenation and/or a pre-trained neural layer (e.g., a fully-connected layer).

According to one or more embodiments, the electronic device may compress the 3D global feature into a 2D BEV feature, may generate an updated BEV feature by performing 2D deformable convolution on the 2D BEV feature, and may generate a merged feature by merging the global feature with the updated BEV feature, but is not limited thereto. According to one or more embodiments, the electronic device may (i) generate the merged feature by merging the global feature with the BEV feature (e.g., the updated BEV feature) using a first fully-connected layer, may generate the merged feature by processing the BEV feature (e.g., the updated BEV feature) using a second fully-connected layer, performing point-wise multiplication between the processing result and the global feature, and adding the point-wise multiplication result to the global feature, or (ii) may generate the merged feature by applying a predefined deformation function to the global feature (e.g., a sampling point corresponding to the global feature) and the BEV feature (e.g., the updated BEV feature).

In operation 150, the electronic device may generate a semantic segmentation result for the input point cloud data based on the merged feature. For example, the electronic device may generate the semantic segmentation result by executing a pre-trained neural semantic segmentation model (e.g., a neural network-based semantic segmentation model) based on the merged feature. For example, when the neural semantic segmentation model is executed based on a feature corresponding to the input point cloud data, the neural semantic segmentation model may be pre-trained to generate a semantic segmentation result that is close to label data corresponding to the input point cloud data. The neural semantic segmentation model may be trained in various known schemes.

For example, the semantic segmentation result may be used for driving route planning of an electronic device (e.g., a mobile machine including a vehicle, such as an autonomous vehicle or a smart vehicle, a drone, and a robot). For example, the semantic segmentation result may indicate inferred categories of the points point cloud, such as, for example, road infrastructure, a road, a sidewalk, a curb, a lane marking, a lane boundary, a traffic sign, traffic lights, a pedestrian overpass, an overpass, and a tunnel, a natural object, such as a tree, natural ground, a rock, and sky, a static object, such as a building, a fence, an utility pole, a dynamic object, such as a vehicle, a motorcycle, a truck, a bus, a bicycle, a pedestrian, and an animal, and other objects, such as a temporary structure, construction equipment, a sign, or a banner. The electronic device may set a safe and efficient driving route to reach a destination using the semantic segmentation result. Of course there are many applications of point cloud segmentations and the subject matter disclosed herein is not limited to the application of driving control.

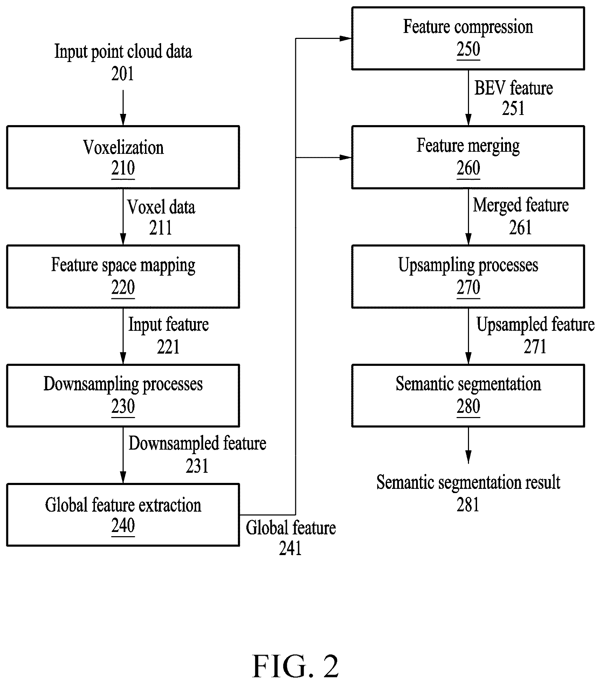

FIG. 2 illustrates an example of a data processing process of a semantic segmentation method, according to one or more embodiments. Referring to FIG. 2, an electronic device may generate voxel data 211 by performing voxelization 210 on input point cloud data 201. The electronic device may generate an input feature 221 by performing feature space mapping 220 based on the voxel data 211.

The electronic device may generate a downsampled feature 231 by performing downsampling processes 230 a preset number of times on the input feature 221. For example, the electronic device may perform a first downsampling process of the downsampling processes by extracting a first local feature using a first spatial aggregation convolution layer including convolutional layers having different kernel sizes, extracting a first global feature from the first local feature using a first transformer layer, and generating a first downsampling result from the first global feature using a first downsampling layer.

The electronic device may generate a global feature 241 by performing global feature extraction 240 based on the downsampled feature 231. For example, the electronic device may extract a local feature from the downsampled feature 231 using the spatial aggregation convolution layer (which may include convolutional layers having different kernel sizes) and may extract the global feature 241 from the local feature using a transformer layer.

The electronic device may generate a BEV feature 251 by performing feature compression 250 in the depth direction based on the global feature 241 (e.g., compressing a 3D to a 2D feature). For example, the electronic device may generate the BEV feature 251 by extracting maximum values in the depth direction from the global feature 241. The global feature 241 may be a 3D feature, and the BEV feature 251 may be a 2D feature. The electronic device may generate a merged feature 261 by performing feature merging 260 based on the global feature 241 and the BEV feature 251.

The electronic device may generate an upsampled feature 271 by performing upsampling processes 270 a preset number of times on the merged feature 261. The electronic device may generate a semantic segmentation result 281 by performing semantic segmentation 280 based on the upsampled feature 271.

According to one or more embodiments, downsampling results and upsampling results may be generated by the downsampling processes 230 and the upsampling processes 270. The downsampled feature 231 may be a downsampling result of the last downsampling process, and the upsampled feature 271 may be an upsampling result of the last upsampling process. The downsampling results generated by the downsampling processes 230 may be used to generate an upsampling result of a corresponding upsampling process from the upsampling processes 270.

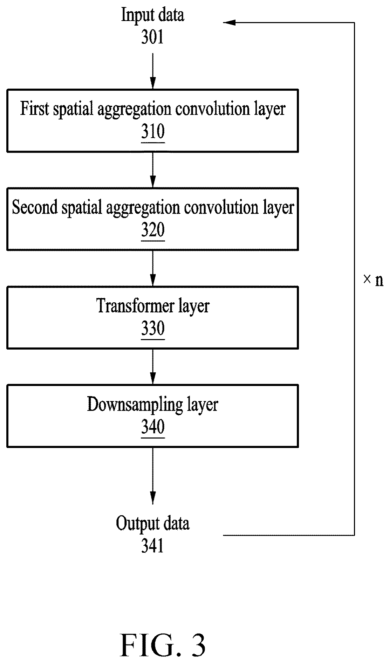

FIG. 3 illustrates an example of operations of a downsampling process, according to one or more embodiments. According to one or more embodiments, an electronic device may iteratively perform downsampling processes a preset number of times (e.g., n times). For example, n may be a natural number greater than or equal to 2, but is not limited thereto.

According to one or more embodiments, when first to n-th downsampling processes are performed, input data 301 of the first downsampling process may be an input feature, and output data 341 thereof may be a first downsampling result. Thereafter, a downsampling process may be performed using an i-th downsampling result as the input data 301, and as a result, an i+1-th downsampling result may be generated as the output data 341. In this case, $1 \leq i \leq n-1$ may be satisfied. The output data 341 generated by a last n-th downsampling process may correspond to an n-th downsampling result or a downsampled feature.

For example, the electronic device may perform the downsampling processes on the input feature using a downsampling module/algorithm. The downsampling module/algorithm may include multiple downsampling blocks that are consecutively connected to each other. The downsampling blocks may have respective different scales; each downsampling block may perform the downsampling process at a corresponding preset scale. An example in which downsampling processes are performed four times is described herein, but the example is not limited thereto. In this case, n may be 4.

For example, the electronic device may generate a first downsampling result by performing a first downsampling process at a preset scale on the input feature, may generate a second downsampling result by performing a second downsampling process at the preset scale on the first downsampling result, may generate a third downsampling result by performing a third downsampling process at the preset scale on the second downsampling result, may generate a fourth downsampling result by performing a fourth downsampling process at its preset scale on the third downsampling result lastly, and may use the fourth downsampling result as a final downsampled feature.

For example, the initial preset scale may be 1/2, but is not limited thereto. In this case, the scales of the first, second, third, and fourth downsampling results may be, respectively 1/2, 1/4, 18/, and 1/16 of an input space scale (e.g., a real space scale) of the input feature. In other words, in one implementation, the spatial scale of a given downsampling process may be 1/2 of the spatial scale of the downsampling process that precedes it. The channel dimensions corresponding to the four downsampling results may be 64, 128, 256, and 256, respectively. According to one or more embodiments, n may be adjusted depending on the actual need and network structure, and as a result, downsampling processes in various counts may be implemented.

Referring to FIG. 3, the electronic device may perform the downsampling process using a first spatial aggregation convolution layer 310, a second spatial aggregation convolution layer 320, a transformer layer 330, and a downsampling layer 340. The first spatial aggregation convolution layer 310, the second spatial aggregation convolution layer 320, the transformer layer 330, and the downsampling layer 340 together may form an instance of a downsampling block. Although FIG. 3 shows an example in which two spatial aggregation convolution layers (e.g., the first spatial aggregation convolution layer 310 and the second spatial aggregation convolution layer 320) are used for the downsampling process, one spatial aggregation convolution layer or three or more spatial aggregation convolution layers may be used.

For example, the electronic device may generate a first downsampling result by extracting a first local feature from the input data 301 using the first spatial aggregation convolution layer 310, extracting a second local feature from the first local feature using the second spatial aggregation convolution layer 320, extracting a global feature from the second local feature using the transformer layer 330, and downsampling the global feature using the downsampling layer 340. Unlike the example of FIG. 3, a single spatial aggregation convolution layer may be used. In this case, an input to the transformer layer 330 may be the first local feature.

The electronic device may extract a local feature from an i-th downsampling result using the first spatial aggregation convolution layer 310 and the second spatial aggregation convolution layer 320, may extract a global feature from the local feature using the transformer layer 330, and may generate an i+1-th downsampling result by downsampling the global feature using the downsampling layer 340. In this case, $1 \leq i \leq n-1$ may be satisfied. An n-th downsampling result generated by the last n-th downsampling process/block may be used as a downsampled feature.

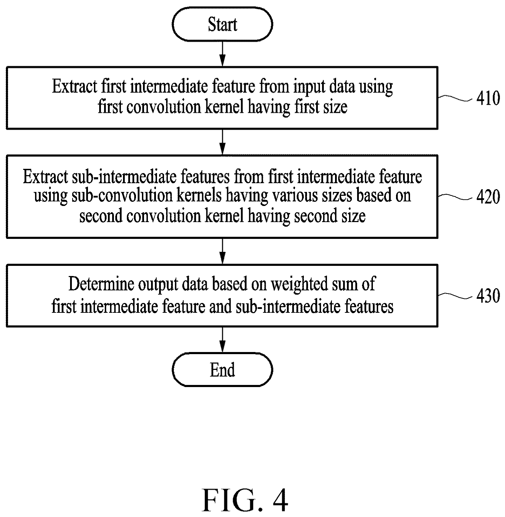

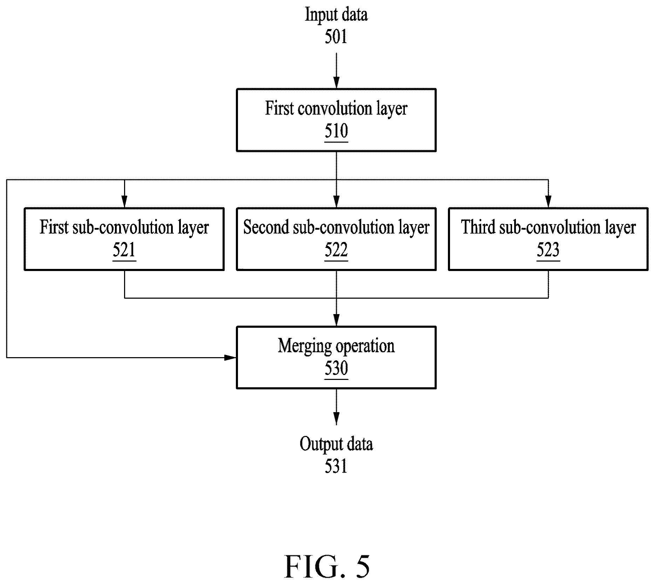

FIG. 4 illustrates an example of operations of a spatial aggregation process, according to one or more embodiments, and FIG. 5 illustrates an example of a data processing process of a spatial aggregation process, according to one or more embodiments. Referring to FIG. 4, in operation 410, an electronic device may extract a first intermediate feature from input data using a first convolution kernel having a first size. For example, the input data to the first spatial aggregation convolution layer of a first downsampling process may be an input feature. In FIG. 5, a first convolution layer 510 may extract the first intermediate feature from input data 501 by using the first convolution kernel.

In operation 420, the electronic device may extract sub-intermediate features from the first intermediate feature using sub-convolution kernels having various respective sizes based on a convolutional kernel having a second size. For example, the electronic device may extract a first sub-intermediate feature from the first intermediate feature using a first sub-convolution kernel, may extract a second sub-intermediate feature from the first intermediate feature using a second sub-convolution kernel, and may extract a third sub-intermediate feature from the first intermediate feature using a third sub-convolution kernel. The electronic device may determine the first, second, and third sub-convolution kernels by disassembling a second convolution kernel, which has a different size from the first convolution kernel, in the longitudinal, width, and depth directions, which are orthogonal to each other. As shown in FIG. 5, a first sub-convolution layer 521 may extract the first sub-intermediate feature from the first intermediate feature using the first sub-convolution kernel, a second sub-convolution layer 522 may extract the second sub-intermediate feature from the first intermediate feature using the second sub-convolution kernel, and a third sub-convolution layer 523 may extract the third sub-intermediate feature from the first intermediate feature using the third sub-convolution kernel.

As noted, the sizes of the first, second, and third sub-convolution kernels may be different from each other, for example. The sizes of the first, second, and third sub-convolution kernels may also be different from the size of the first convolution kernel. The length and width of the first sub-convolution kernel may be greater than the length and width of the first convolution kernel, the length and depth of the second sub-convolution kernel may be greater than the length and depth of the first convolution kernel, and the width and depth of third sub-convolution kernel may be greater than the width and depth of the first convolution kernel, but the example is not limited thereto. For example, the length and width of the first sub-convolution kernel may be less than the length and width of the first convolution kernel, the length and depth of the second sub-convolution kernel may be less than the length and depth of the first convolution kernel, and the width and depth of third sub-convolution kernel may be less than the width and depth of the first convolution kernel.

According to one or more embodiments, the electronic device may extract the first intermediate feature with code or hardware configured as described by Equation 1 below. That is, Equation 1 (as with the other equations disclosed herein) is a convenient shorthand description of how to construct corresponding source code or a high-level circuit design that can be compiled or that can be translated into an actual circuit plan.

### Equation 1

$$X = x_{inp} + conv_{3*3*3}(x_{inp})$$

In Equation 1, X denotes the first intermediate feature, $x_{inp}$ denotes an initial feature or an i-th downsampling result, and $conv_{3*3*3}$ denotes the first convolution kernel. In this example, the length, width, and depth of the first convolution kernel may each be 3, but the example is not limited thereto. The length, width, and depth of the first convolution kernel may be set to different values as needed. Optionally, after performing a $3 \times 3 \times 3$ convolution task with the 3x3x3 first convolution kernel, the electronic device may obtain/output the first intermediate feature from a convolution result using a normalization task (e.g., LayerNorm (LN) and an activation function (e.g., GeLU)).

According to one or more embodiments, the electronic device may extract an i-th sub-intermediate feature with code or circuitry configured as described by Equation 2 below.

### Equation 2

$$X_i = conv_i(X), i = 1,2,3$$

In Equation 2, $X_i$ is an i-th sub-intermediate feature, and $conv_i$, $(i = 1,2,3)$ denotes sub-convolution kernels having 5×5×1, 5×1×5, 1×5×5 sizes, respectively. In this example, the length, width, and depth of the second convolution kernel may each be 5, but the example is not limited thereto. The length, width, and depth of the second convolution kernel may be set to different values as needed. A sub-convolution kernel $conv_i$ may be obtained by disassembling the second convolution kernel in the longitudinal, width, and depth directions, which are orthogonal to each other. In this example, sub-convolution kernels having 5×5×1, 5×1×5, 1×5×5 sizes, respectively, may be obtained by the disassembling. Sub-intermediate features may be obtained by performing convolution processing on the first intermediate feature using the sub-convolution kernels having different sizes. Optionally, after performing 5×5×1, 5×1×5, 1×5×5 convolution tasks, the electronic device may output the sub-intermediate features from the convolution result using a normalization task (e.g., LN) and an activation function (e.g., GeLU).

In operation 430, the electronic device may determine the output data based on a weighted sum of the first intermediate feature and the sub-intermediate features. For example, the output data of the first spatial aggregation convolution layer of the first downsampling process may be the first local feature. For example, the electronic device may determine the first local feature based on a weighted sum of the first intermediate feature, the first sub-intermediate feature, the second sub-intermediate feature, and the third sub-intermediate feature. In FIG. 5, the weighted sum of the first intermediate feature, the first sub-intermediate feature, the second sub-intermediate feature, and the third sub-intermediate feature may be calculated by a merging operation 530.

According to one or more embodiments, the electronic device may execute code or circuitry according to Equation 3 to calculate a weight.

### Equation 3

$$W_i = softmax(Linear(X)) \in R^{n \times 3}$$

$W_i$ denotes a weight corresponding to an i-th sub-intermediate feature, R denotes a rational number, and n denotes non-empty point cloud data. softmax denotes an activation function, and Linear denotes a linear function.

According to one or more embodiments, the electronic device may determine output data 531 of the spatial aggregation convolution layer by executing code or circuitry configured as per Equation 4 to compute a weighted sum.

### Equation 4

$$X_{out} = X + \sum_{i=1}^{3} W_i \times X_i$$

$X_{out}$ denotes the output data 531. The processing ability of the semantic segmentation model for a sparse and massive point cloud space may be improved by disassembling a large convolution kernel (e.g., the first convolution kernel) into sub-convolution kernels (e.g., the first sub-convolution kernel, the second sub-convolution kernel, and the third sub-convolution kernel) according to the length, width, and depth. In addition, the processing ability may be improved by reducing parameters and the amount of computations during the computation process.

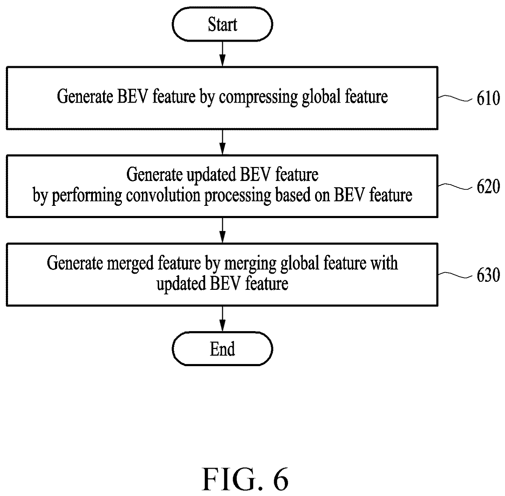

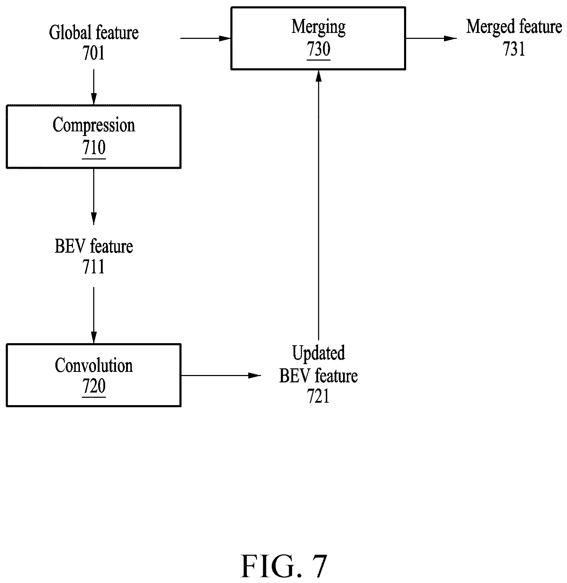

FIG. 6 illustrates an example of operations of a feature merging process, according to one or more embodiments. FIG. 7 illustrates an example of a feature merging process, according to one or more embodiments. Referring to FIGS. 6 and 7, in operation 610, an electronic device may generate a BEV feature 711 by compressing 710 a global feature 701. For example, the electronic device may compress the global feature 701 in the depth (e.g., downward) direction by performing a densification process based on the 3D global feature 701 and/or a process to obtain maximum values in the depth direction, but is not limited thereto. For example, the electronic device may generate the BEV feature 711 by extracting the maximum values in the depth direction from the global feature 701. In operation 620, the electronic device may generate an updated BEV feature 721 by performing convolution 720 based on the BEV feature 711. In operation 630, the electronic device may generate a merged feature 731 by merging 730 the global feature 701 with the updated BEV feature 721.

According to one or more embodiments, the electronic device may compress 710 the global feature 701 with code/circuitry configured as described by Equation 5.

### Equation 5

$$F_{bev} = Max(Dense(F_{voxel}))$$

In Equation 5, $F_{bev}$ is the BEV feature 711, Max is a process to obtain a maximum value in the depth direction, Dense is a densification process, and $F_{voxel}$ is the global feature 701.

According to one or more embodiments, the electronic device may perform convolution 720 based on the BEV feature 711 based on Equation 6 below.

### Equation 6

$$F'_{bev} = O(conv(F_{bev}))$$

In Equation 6, $F'_{bev}$ denotes the updated BEV feature 721, conv denotes convolution (e.g., 3×3 convolution), and O denotes a 2D operator (e.g., a 2D deformable convolution network (DCN) operator).

According to one or more embodiments, the electronic device may merge 730 the global feature 701 with the updated BEV feature 721 with code/circuitry described by Equation 7 below.

Equation 7

$$F'_{voxel} = fusion(F_{voxel}, F'_{bev})$$

In Equation 7, $F'_{voxel}$ denotes the merged feature 731 and fusion denotes merging 730 (e.g., multimodal dynamic merging).

According to one or more embodiments, the electronic device may merge 730 the global feature 701 with the updated BEV feature 721 by concatenating the global feature 701 and the updated BEV feature 721 using a first fully-connected layer. For example, the electronic device may merge 730 with code/circuitry configured as described by Equation 8 below.

Equation 8

$$F'_{voxel} = MLP(F_v © F'_{bev})$$

In Equation 8, MLP denotes the first fully-connected layer, and © denotes concatenation. For example, MLP may include two layers, but is not limited thereto.

Optionally, the electronic device may generate the merged feature 731 by processing the updated BEV feature 721 using a second fully-connected layer, performing pointwise multiplication between the processing result and the global feature 701, and adding the global feature 701 to the pointwise multiplication result. For example, the electronic device may merge 730 using code/circuitry configured as described by Equation 9 below.

Equation 9

$$F'_{voxel} = F_{voxel} + \sigma\big(FC(F'_{bev})\big) \odot F_{voxel}$$

In Equation 9, FC denotes a fully-connected layer. FC may be used to train the BEV feature 711. σ denotes an activation function (e.g., Sigmoid), and ⊙ denotes pointwise multiplication.

Optionally, the electronic device may generate the merged feature 731 by applying a predefined deformation function to the global feature 701. For example, the electronic device may generate the merged feature 731 by applying the deformation function to the global feature 701, a sampling point corresponding to the global feature 701 in the updated BEV feature 721, and the updated BEV feature 711. For example, the electronic device may merge 730 using code/circuitry configured as described by Equation 10 below.

Equation 10

$$F'_{voxel} = \sum_{j=1}^{ref} Deform\big(F_{voxel}, P(p + \Delta_j), F'_{bev}\big)$$

In Equation 10, ref denotes the number of sampling points, $P(p + \Delta_j)$ denotes each sampling point on the BEV feature 711 corresponding to the global feature 701, and $\Delta_j$ denotes an offset amount. According to one or more embodiments, the global feature extraction ability of the semantic segmentation model may be enhanced by converting a sparse voxel feature into the BEV feature 711 and then merging the BEV feature 711 with a voxel feature using a 2D operator.

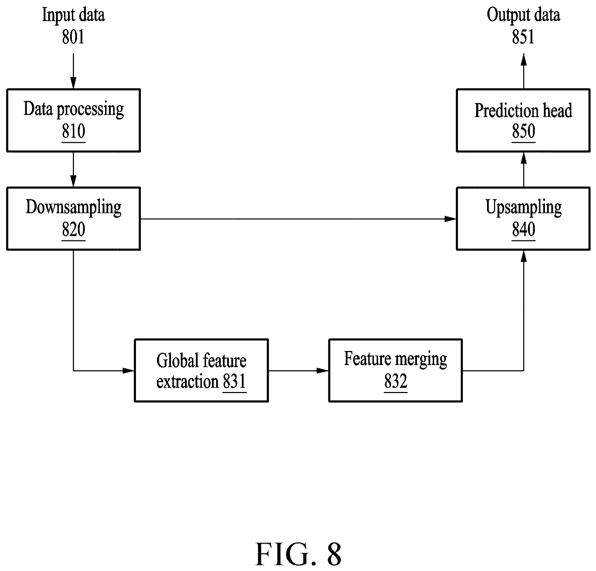

FIG. 8 illustrates an example of linked processing of a downsampling process and an upsampling process, according to one or more embodiments. Referring to FIG. 8, an electronic device may perform semantic segmentation on input data 801 (e.g., point cloud data) and may output output data 851 (e.g., a semantic segmentation result).

More specifically, the electronic device may generate an input feature by performing data processing 810 on the input data 801 (e.g., the point cloud data). The data processing 810 may include voxelization and/or feature extraction, but is not limited thereto.

The electronic device may generate a downsampled feature by performing downsampling 820 on the input feature. According to one or more embodiments, the electronic device may perform downsampling 820 using a neural downsampling network. For example, the neural downsampling network may include downsampling blocks. The downsampling blocks may be connected in series. For example, the number of downsampling blocks may be 4, but is not limited thereto. Each downsampling block may include one or more spatial aggregation convolution layers, a transformer layer, and a downsampling layer. For example, the number of spatial aggregation convolution layers may be 2, but the example is not limited thereto. For example, each downsampling block may perform a 1/2 scale downsampling process, but the example is not limited thereto.

In this example, a first downsampling block may generate a first downsampling result of which the scale is 1/2 of its input space scale (initial space scale) by performing the 1/2 scale downsampling process on the input feature. A second downsampling block may generate a second downsampling result of which the scale is 1/4 of the initial space scale by performing the 1/2 scale downsampling process on the first downsampling result. A third downsampling block may generate a third downsampling result of which the scale is 1/8 of the initial space scale by performing the 1/2 scale downsampling process on the second downsampling result. A fourth downsampling block may generate a fourth downsampling result of which the scale is 1/16 of the initial space scale by performing the 1/2 scale downsampling process on the third downsampling result.

In each downsampling block, the first spatial aggregation convolution layer may receive an input feature or a previous downsampling result and may extract a first local feature from the input feature or the previous downsampling result. The second spatial aggregation convolution layer may receive the first local feature and may extract a second local feature from the first local feature. The transformer layer may receive the second local feature and may extract a global feature from the second local feature. The downsampling layer may receive the global feature and may generate a downsampling result by downsampling the global feature. A downsampling result of the last downsampling block (e.g., the fourth downsampling block) may be referred to as a downsampled feature.

The electronic device may generate a global feature by performing global feature extraction 831 based on the downsampled feature. According to one or more embodiments, the electronic device may perform global feature extraction 831 using a neural global feature extraction network. For example, the global feature extraction network may include one or more spatial aggregation convolution layers and a transformer layer, but the example is not limited thereto. For example, the number of spatial aggregation convolution layers may be 2, but the example is not limited thereto.

In this example, the first spatial aggregation convolution layer may receive a downsampled feature and may extract a third local feature from the downsampled feature. The second spatial aggregation convolution layer may receive the third local feature and may extract a fourth local feature from the third local feature. The transformer layer may receive the fourth local feature and may extract a global feature from the fourth local feature.

The electronic device may generate a merged feature by performing feature merging 832 based on the global feature. According to one or more embodiments, the electronic device may perform feature merging 832 using a neural feature merging network. For example, the neural feature merging network may include a merge layer. The merge layer may generate a merged feature by merging the global feature with the BEV feature. The electronic device may generate the BEV feature by compressing the global feature into the BEV feature in the depth direction.

The electronic device may generate an upsampled feature by performing upsampling 840 on the merged feature. According to one or more embodiments, the electronic device may perform upsampling 840 using a neural upsampling network. For example, the neural upsampling network may include a plurality of upsampling blocks. The neural upsampling blocks may be connected in series. For example, the number of multiple upsampling blocks may be 4, but is not limited thereto.

Each upsampling block may include an upsampling layer and one or more spatial aggregation convolution layers. For example, the number of spatial aggregation convolution layers may be 2, but the example is not limited thereto. Each upsampling block may perform upsampling corresponding to the inverse of downsampling scale. For example, each upsampling block may perform a double-scale upsampling process, but the example is not limited thereto.

In this example, a first upsampling block may output an upsampling output by performing an upsampling process on a merged feature using the upsampling layer and may generate a first merged result by merging the upsampling output with the fourth downsampling result. The first upsampling block may extract a fifth local feature from the first merged result using the first spatial aggregation convolution layer and may extract a sixth local feature from the fifth local feature using the second spatial aggregation convolution layer. The sixth local feature may correspond to a first upsampling result. A second upsampling block may generate a second upsampling result by performing corresponding processing of its first upsampling block on the first upsampling result, may generate a third upsampling result by performing corresponding processing of its first upsampling block on the second upsampling result, and may generate a fourth (last) upsampling result by performing corresponding processing of its first upsampling block on the third upsampling result. The last upsampling result (e.g., the fourth upsampling result) may be referred to as an upsampled feature.

A prediction head 850 may generate the output data 851 (e.g., the semantic segmentation result) by predicting a semantic label based on the upsampled feature.

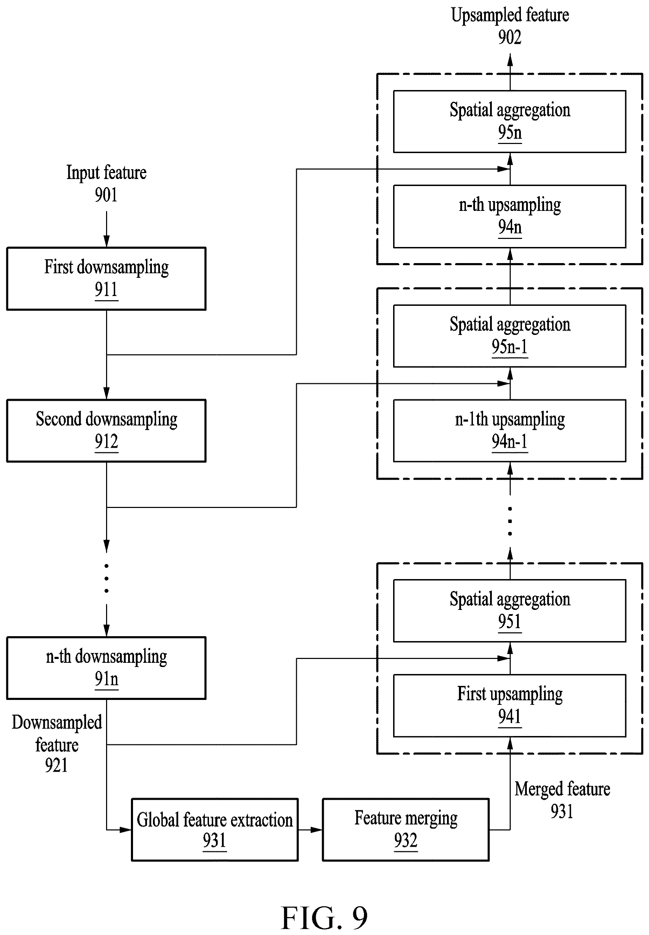

FIG. 9 illustrates an example of detailed linked processing of a downsampling process and an upsampling process, according to one or more embodiments. According to one or more embodiments, an electronic device may generate a downsampled feature 921 by performing n (e.g., four) downsampling processes (e.g., first downsampling 911, second downsampling 912, and n-th downsampling 91n) using n (e.g., four) downsampling blocks. The electronic device may generate a merged feature 931 by performing global feature extraction 931 (e.g., the global feature extraction 831 of FIG. 8) and feature merging 932 (e.g., the feature merging 832 of FIG. 8) based on the downsampled feature 921.

The electronic device may generate an upsampled feature 902 by performing first upsampling process 941 (and a related spatial aggregation 951 on its result), as well as n (e.g., four) upsampling processes 94n-1, 95n-1, 94n, and 95n using n (e.g., four) upsampling blocks. In each upsampling process, the electronic device may generate an upsampling result by performing upsampling (e.g., the first upsampling 941, the n-1-th upsampling 94n-1, and up to the n-th upsampling 94n) on either the merged feature 931 or on an upsampling result of the previous upsampling block using the upsampling layer and performing spatial aggregation (e.g., spatial aggregation 951, spatial aggregation 95n-1, and spatial aggregation 95n) on a merged result of the upsampling output of upsampling with a corresponding downsampling result. The corresponding downsampling of the first upsampling 941 may be n-th downsampling 91n, the corresponding downsampling of the n-1-th upsampling 94n-1 may be second downsampling 912, and the corresponding downsampling of the n-th upsampling 94n may be first downsampling 911.

For example, the first upsampling block may generate a first upsampling output by performing the first upsampling 941 on the merged feature 931, may generate a first merging result by merging that first upsampling output with the n-th downsampling result, and may generate a first upsampling result by performing spatial aggregation 951 based on the first merged result. The i+1-th upsampling block may generate the i+1-th upsampling output by performing i+1-th upsampling based on the i-th upsampling result, may generate the i+1-th merging result by merging that i+1-th upsampling output with the n-i-th downsampling result, and may generate the i+1-th upsampling result by performing i+1-th spatial aggregation based on that i+1-th merged result. In this case, $1 \leq i \leq n-1$ may be satisfied. The n-th upsampling result of the n-th upsampling block may be the upsampled feature 902. Optionally, the electronic device may merge the upsampling output with the corresponding downsampling result by skip connection merging (note that "optional" does not imply that other features described herein are non-optional).

For example, each upsampling block may perform upsampling (e.g., the first upsampling 941, the n-1-th upsampling 94n-1, and the n-th upsampling 94n) at a preset scale using the upsampling layer and may perform spatial aggregation (e.g., the spatial aggregations 951, 95n-1, and 95n) using one or more spatial aggregation convolution layers. For example, the preset scale may be 1/2 and may be implemented by transpose convolution, but the example is not limited thereto. An upsampling count may be the same as a downsampling count.

For example, the upsampling count and the downsampling count may each be 4, but are not limited thereto. In this case, the first upsampling block may generate the first upsampling result by performing the first upsampling 941 in accordance with the preset scale on the merged feature 931 using the first upsampling layer, generating the first merging result by merging the first upsampling output of the first upsampling 941 with the fourth downsampling result, and performing spatial aggregation convolution processing on the first merging result using one or more spatial aggregation convolution layers. The second upsampling block may generate the second upsampling result by performing second upsampling (not shown) in accordance with the preset scale on the first upsampling result using the second upsampling layer, generating a second merging result by merging the output of the second upsampling with the third downsampling result, and performing spatial aggregation convolution processing on the second merging result using one or more spatial aggregation convolution layers. The operations of the third and fourth upsampling blocks may correspond to the operation of the second upsampling block.

According to one or more embodiments, the electronic device may enhance the learning ability and generalization ability of the neural semantic segmentation model by merging (e.g., skip connection merging) each upsampling output with a corresponding downsampling result.

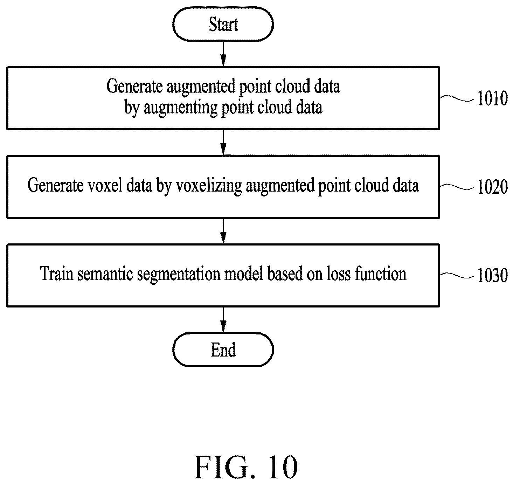

FIG. 10 illustrates an example of training operations of a semantic segmentation model, according to one or more embodiments. Referring to FIG. 10, in operation 1010, an electronic device may generate augmented point cloud data by augmenting point cloud data. For example, the electronic device may generate the augmented point cloud data by performing sample mix augmentation on the point cloud data as an initial sample and performing point cloud structure augmentation on the point cloud data on which sample mix augmentation has been performed. The diversity of the point cloud data as the initial sample may increase by sample mix augmentation and cloud structure augmentation, and as a result, the quality of training data and model performance may be enhanced.

For example, the electronic device may implement sample mix augmentation by performing the following processing on point cloud data of two frames (e.g., consecutive two frames). Point cloud data of two frames and a label of each point of the point cloud data may be read. An azimuth angle of each point of the point cloud data of each frame may be calculated. For example, the two frames may include a first frame and a second frame. The electronic device may exchange a point of the point cloud data of the first frame within a preset azimuth angle range with a point of the point cloud data of the second frame. After the exchange, the electronic device may copy all points labeled with a preset/given label in the point cloud data of the second frame to the point cloud data of the first frame. The electronic device may obtain point cloud data in which sample mix augmentation is completed by updating the label of each point of the point cloud data of the first frame.

For example, an azimuth range of preset polar coordinates may be $(\alpha, \beta)$. When the point cloud data is based on a Semantic-KITTI dataset, $\alpha$ may be a random value in a range of $\left[0, \frac{2}{3}\pi\right]$. $\beta = \alpha + \pi$ may be satisfied. When the point cloud data is based on a nuScenes dataset, $\alpha = -\frac{\pi}{2}$ and $\beta = \frac{\pi}{2}$ may be satisfied.

In addition, the electronic device may implement sample mix augmentation by performing the following processing on each piece of point cloud data of the two frames. The point cloud data of two frames and a label of each point of the point cloud data may be read/-accessed. An elevation angle of each point in the point cloud data of each frame may be calculated. A preset elevation angle interval may be uniformly segmented into a preset number of lower elevation angle intervals, and the elevation angle interval may be segmented into an odd elevation angle interval and an even elevation angle interval based on whether the sequence number of the lower elevation angle interval is odd or even. A point where an elevation angle falls into the even elevation angle interval in the point cloud data of the second frame may be exchanged with a point where an elevation angle falls into the even elevation angle interval in the point cloud data of the first frame, and/or may a point where an elevation angle falls into the odd elevation angle interval in the point cloud data of the second frame may be exchanged with a point where an elevation angle falls into the odd elevation angle interval in the point cloud data of the first frame. Point cloud data may be obtained in which sample mix augmentation is completed by updating the label of each point of the point cloud data of the first frame.

For example, the electronic device may determine the elevation angle based on Equation 11 below.

Equation 11

$$\varphi = \arctan \frac{z}{\sqrt{x^2 + y^2}}$$

In Equation 11, x, y, and z are 3D coordinates of a point in the point cloud data. The preset elevation angle interval is expressed as $[\varphi_{min}, \varphi_{max}]$. The preset number may be one of 3, 4, 5, and 6, but is not limited thereto. When the point cloud data is based on the Semantic-KITTI dataset, $\varphi_{min}$ = -25° and $\varphi_{max}$ = 3° may be satisfied. When the point cloud data is based on the nuScenes dataset, $\varphi_{min}$ = -30° and $\varphi_{max}$ = 10° may be satisfied.

Optionally, the electronic device may implement the point cloud structure augmentation through the following processing. The sample mix augmented point cloud data may be rotated by a preset angle based on a first coordinate axis. The rotated point cloud data may be flipped based on an arbitrary coordinate axis. The flipped point cloud data may be scaled. Point cloud data may be obtained of which its point cloud structure is augmented by adding noise data to the scaled point cloud data. For example, the first coordinate axis may be the Z-axis of the 3D coordinate axis, and the preset angle may be an arbitrary angle value in $(-\pi, \pi)$, but the example is not limited thereto. For example, the scale may be obtained by random uniform sampling from the range of [0.95, 1.05], but the example is not limited thereto. For example, when adding the noise data noise data having a normal distribution with a mean value of 0 and a standard deviation of 0.1 may be used, but the example is not limited thereto.

In operation 1020, the electronic device may generate voxel data by voxelizing the augmented point cloud data. As a result, various pieces of voxel sample data to be used for training data may be obtained. For example, the point cloud data may convert into cuboid voxel data through voxelization (e.g., by gridwise sectioning of the point cloud), but the example is not limited thereto.

In operation 1030, the electronic device may train a semantic segmentation model based on a loss function and the voxel sample data. For example, the loss function may be configured based on a cross-entropy function and/or Lovasz-Softmax function. The semantic segmentation model may be trained by updating parameters of the semantic segmentation model to minimize a loss function value.

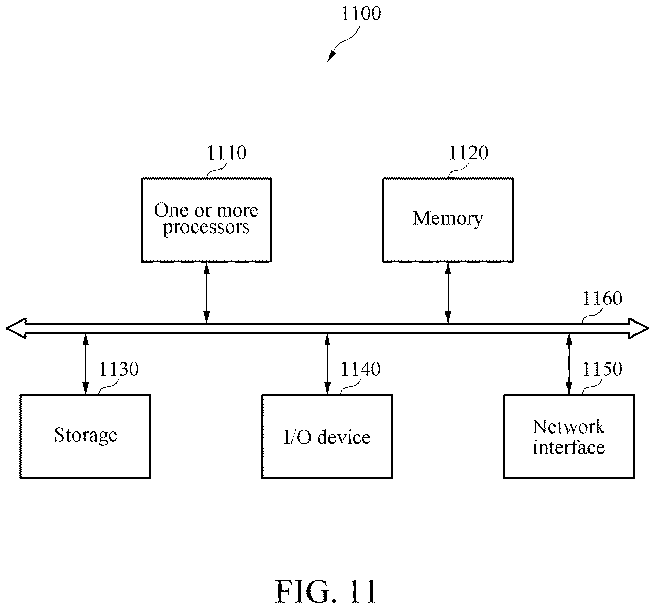

FIG. 11 illustrates an example of a configuration of an electronic device, according to one or more embodiments. Referring to FIG. 11, an electronic device 1100 may include one or more processors 1110 (in the case of multiple processors, such processors may be homogenous or heterogenous), a memory 1120, a storage 1130, an input/output (I/O) device 1140, and a network interface 1150, which may communicate with each other via a communication bus 1160. For example, the electronic device 1100 may be implemented as at least a portion of a mobile device, such as a mobile phone, a smartphone, a personal digital assistant (PDA), a netbook, a tablet computer, and a laptop computer, a wearable device, such as a smartwatch, a smartband, and smartglasses, and a mobile machine, such as a vehicle, a drone, and a robot.

The one or more processors 1110 may execute instructions/code stored in the memory 1120 or the storage 1130. The instructions/code, when executed by the one or more processors 1110, may cause the electronic device to perform the operations described with reference to FIGS. 1 to 10. The memory 1120 may include a computer-readable storage medium or a computer-readable storage device. The memory 1120 may store instructions/code to be executed by the one or more processors 1110 and may store related information while software and/or an application is executed by the electronic device 1100.

The storage 1130 may include a computer-readable storage medium or a computer-readable storage device. The storage 1130 may store a greater volume of information than the memory 1120 and may store the information for a long period of time. For example, the storage 1130 may include a magnetic hard disk, an optical disk, flash memory, a floppy disk, or other non-volatile memories known in the art.

The I/O device 1140 may receive an input from the user in traditional input manners through a keyboard and a mouse, and in new input manners such as a touch input, a voice input, and an image input. For example, the I/O device 1140 may include a keyboard, a mouse, a touch screen, a microphone, or any other device that detects the input from the user and transmits the detected input to the electronic device 1100. The I/O device 1140 may provide an output of the electronic device 1100 to the user through a visual, auditory, or haptic channel. The I/O device 1140 may include, for example, a display, a touchscreen, a speaker, a vibration generator, or any other device configured to provide the output to the user. The network interface 1150 may communicate with an external device via a wired or wireless network.

The computing apparatuses, the electronic devices, the processors, the memories, the sensors, the displays, the information output system and hardware, the storage devices, and other apparatuses, devices, units, modules, and components described herein, including descriptions with respect to respect to FIGS. 1-11, are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit (ALU), a digital signal processor (DSP), a microcomputer, a programmable logic controller, a field-programmable gate array (FPGA), a programmable logic array (PLU), a microprocessor, or any other device or combination of devices that is configured to respond to and execute instructions (e.g., code or coding) in a defined manner to achieve a desired result. In one example, a processor or computer includes, or is connected to, one or more memories storing the instructions or software that are executed by the processor or computer. Hardware components implemented by a processor or computer may execute the instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both, and thus while some references may be made to a singular processor or computer, such references also are intended to refer to multiple processors or computers. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing. Thus, references to a processor herein mean processing circuitry (e.g., circuitry that includes one or more processing element(s) circuits). One or more processors comprising processing circuitry also refers to each processor comprising processing circuitry, as well as some or all of the one or more processors comprising the same processing circuitry. In addition, processors(s) and controller(s), as a non-limiting example, do not mean human processing or human control, but rather, refer to hardware components as described herein, as non-limiting examples.

The methods illustrated in, and discussed with respect to, FIGS. 1-11 that perform the operations described in this application are performed by computing hardware, for example, by one or more processors or computers, implemented as described above implementing the instructions (e.g., computer or processor/processing device readable instructions) or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations. References to a processor, or one or more processors, as a non-limiting example, configured to perform two or more operations refers to a processor or two or more processors being configured to collectively perform all of the two or more operations, as well as a configuration with the two or more processors respectively performing any corresponding one of the two or more operations (e.g., with a respective one or more processors being configured to perform each of the two or more operations, or any respective combination of one or more processors being configured to perform any respective combination of the two or more operations). Likewise, a reference to a processor-implemented method is a reference to a method that is performed by one or more processors or other processing or computing hardware of a device or system.

The instructions or software to control computing hardware, for example, one or more processors or computers, to implement the hardware components and perform the methods as described above may be written as computer programs, code segments, or other executable instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. Thus, references herein to storage media mean storage media hardware, and does not mean to transitory media, nor a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as a multimedia card or a micro card (for example, secure digital (SD) or extreme digital (XD)), magnetic tapes, floppy disks, magneto-optical data storage devices, optical data storage devices, hard disks, solid-state disks, and/or any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components.

Therefore, in addition to the above and all drawing disclosures, the scope of the disclosure is also inclusive of the claims, i.e., all variations within the scope of the claims are to be construed as being included in the disclosure.

**Claims**

1. A processor-implemented semantic segmentation method, the method comprising:

   generating an input feature corresponding to input point cloud data;
   generating a global feature by performing global feature extraction based on the input feature;
   generating a bird's eye view, 'BEV', feature by compressing the global feature in a depth direction corresponding to the BEV;
   generating a merged feature by merging the global feature with the BEV feature; and
   generating a semantic segmentation result for the input point cloud data based on the merged feature.

2. The method of claim 1, further comprising:

   generating a downsampled feature by performing a downsampling process by a first preset number of times on the input feature; and
   generating an upsampled feature by performing an upsampling process by a second preset number of times on the merged feature, wherein the first and second preset numbers are the same or are different,

wherein the generating of the global feature comprises generating the global feature by performing global feature extraction based on the downsampled feature, and

wherein the generating of the semantic segmentation result comprises generating the semantic segmentation result based on the upsampled feature.

3. The method of claim 2, wherein downsampling results generated by the downsampling processes are used to generate an upsampling result among the performances of the upsampling process.

4. The method of claim 2 or 3, wherein a first performance of the downsampling process performances comprises:

extracting a first local feature from the input feature using a first spatial aggregation convolution layer that includes convolution layers having different kernel sizes;
extracting a first global feature from the first local feature using a first transformer layer; and
generating a first downsampling result from the first global feature using a first downsampling layer;
the extracting of the first local feature preferably comprising:

extracting a first intermediate feature from the input feature using a first convolution kernel;
extracting a first sub-intermediate feature from the first intermediate feature using a first sub-convolution kernel;
extracting a second sub-intermediate feature from the first intermediate feature using a second sub-convolution kernel;
extracting a third sub-intermediate feature from the first intermediate feature using a third sub-convolution kernel; and
determining the first local feature based on the first intermediate feature, the first sub-intermediate feature, the second sub-intermediate feature, and the third sub-intermediate feature;

wherein the first sub-convolution kernel, the second sub-convolution kernel, and the third sub-convolution kernel are preferably determined by disassembling a second convolution kernel that has a different size from the first convolution kernel, into longitudinal, width, and depth directions that are orthogonal to each other.

5. The method of any of the claims 2-4, wherein the generating of the global feature based on the downsampled feature comprises:

extracting a second local feature from the downsampled feature using a second spatial aggregation convolution layer including convolution layers having different kernel sizes; and
extracting the global feature from the second local feature using a second transformer layer.

6. The method of any of the previous claims, wherein the generating of the BEV feature comprises generating the BEV feature by extracting maximum values in the depth direction from the global feature.

7. The method of any of the previous claims, wherein the global feature is a three-dimensional, '3D', feature, and wherein the BEV feature is a two-dimensional, '2D', feature.

8. The method of any of the previous claims, wherein generating the merged feature comprises merging the global feature with the BEV feature using a first fully-connected layer;

wherein said generating the merged feature comprises processing the BEV feature using a second fully-connected layer, performing pointwise multiplication between the global feature and a result of the processing, and adding a result of the pointwise multiplication to the global feature; or
wherein said generating the merged feature comprises applying a predefined deformation function to the global feature and the BEV feature.

9. A non-transitory computer-readable storage medium storing one or more programs including instructions, wherein the instructions, when individually or collectively executed by at least one processor, cause the at least one processor to:

generate an input feature corresponding to input point cloud data;
generate a global feature by performing global feature extraction based on the input feature;
generate a bird's eye view, 'BEV', feature by compressing the global feature in a depth direction corresponding to the BEV;
generate a merged feature by merging the global feature with the BEV feature; and
generate a semantic segmentation result for the input point cloud data based on the merged feature.

10. An electronic device comprising:

   one or more processors comprising circuitry; and
   memory storing instructions,
   wherein the instructions, when executed by the one or more processors, cause the electronic device to perform the method of any of the claims 1-9, or cause the electronic device to:

   generate an input feature corresponding to input point cloud data,
   generate a global feature by performing global feature extraction based on the input feature,
   generate a bird's eye view, 'BEV', feature by compressing the global feature in a depth direction corresponding to the BEV,
   generate a merged feature by merging the global feature with the BEV feature, and
   generate a semantic segmentation result for the input point cloud data based on the merged feature.

11. The electronic device of claim 10, wherein the instructions, when executed by the one or more processors, further cause the electronic device to:

   generate a downsampled feature by performing a downsampling process by a first preset number of times on the input feature, and
   generate an upsampled feature by performing an upsampling process by a second preset number of times on the merged feature, wherein the first and second preset numbers are the same or are different;
   wherein downsampling results generated by the performances of the downsampling process are preferably used to generate an upsampling result among the performances of the upsampling process.

12. The electronic device of claim 11, wherein the instructions, when executed by the one or more processors, to perform a first downsampling process of the downsampling processes, cause the electronic device to:

   extract a first local feature from the input feature using a first spatial aggregation convolution layer that includes convolution layers having different kernel sizes,
   extract a first global feature from the first local feature using a first transformer layer, and
   generate a first downsampling result from the first global feature using a first downsampling layer;
   wherein the instructions, when executed by the one or more processors, to extract the first local feature, preferably cause the electronic device to:

   extract a first intermediate feature from the input feature using a first convolution kernel,
   extract a first sub-intermediate feature from the first intermediate feature using a first sub-convolution kernel,
   extract a second sub-intermediate feature from the first intermediate feature using a second sub-convolution kernel,
   extract a third sub-intermediate feature from the first intermediate feature using a third sub-convolution kernel, and
   determine the first local feature based on the first intermediate feature, the first sub-intermediate feature, the second sub-intermediate feature, and the third sub-intermediate feature;

   wherein the first sub-convolution kernel, the second sub-convolution kernel, and the third sub-convolution kernel are preferably determined by disassembling a second convolution kernel that has a different size from the first convolution kernel, into longitudinal, width, and depth directions that are orthogonal to each other.

13. The electronic device of claim 11 or 12, wherein the instructions, when executed by the one or more processors, to generate the global feature based on the downsampled feature, cause the electronic device to:

   extract a second local feature from the downsampled feature using a second spatial aggregation convolution layer including convolution layers having different kernel sizes, and
   extract the global feature from the second local feature using a second transformer layer.

14. The electronic device of any of the claims 10-13, wherein the instructions, when executed by the one or more processors, to generate the BEV feature, cause the electronic device to:

   generate the BEV feature by extracting maximum values in the depth direction from the global feature.

15. The electronic device of any of the claims 10-14, wherein the instructions, when executed by the one or more processors, cause the electronic device to:

   generate the merged feature by merging the global feature with the BEV feature using a first fully-connected layer,
generate the merged feature by processing the BEV feature using a second fully-connected layer, performing pointwise multiplication between the global feature and a result of the processing, and adding a result of the pointwise multiplication to the global feature, or
generate the merged feature by applying a predefined deformation function to the global feature and the BEV feature.

```
                    ┌─────────┐
                    │  Start  │
                    └─────────┘
                         │
                         ▼
┌──────────────────────────────────────────────────────────┐
│  Generate input feature corresponding to input point cloud data  │──── 110
└──────────────────────────────────────────────────────────┘
                         │
                         ▼
┌──────────────────────────────────────────────────────────┐
│  Generate global feature by performing global feature extraction  │──── 120
│                  based on input feature                    │
└──────────────────────────────────────────────────────────┘
                         │
                         ▼
┌──────────────────────────────────────────────────────────┐
│  Generate BEV feature by compressing global feature in depth direction  │──── 130
└──────────────────────────────────────────────────────────┘
                         │
                         ▼
┌──────────────────────────────────────────────────────────┐
│  Generate merged feature by merging global feature with BEV feature  │──── 140
└──────────────────────────────────────────────────────────┘
                         │
                         ▼
┌──────────────────────────────────────────────────────────┐
│  Generate semantic segmentation result for input point cloud data  │──── 150
│                  based on merged feature                   │
└──────────────────────────────────────────────────────────┘
                         │
                         ▼
                    ┌─────────┐
                    │   End   │
                    └─────────┘
```

# FIG. 1

Input point cloud data
201

↓

Voxelization
210

Voxel data
211

↓

Feature space mapping
220

Input feature
221

↓

Downsampling processes
230

Downsampled feature
231

↓

Global feature extraction
240

Global feature
241

Feature compression
250

BEV feature
251

↓

Feature merging
260

Merged feature
261

↓

Upsampling processes
270

Upsampled feature
271

↓

Semantic segmentation
280

↓

Semantic segmentation result
281

# FIG. 2

Input data
301

First spatial aggregation convolution layer
310

Second spatial aggregation convolution layer
320

Transformer layer
330

Downsampling layer
340

Output data
341

$\times n$

FIG. 3

```
        ( Start )
            │
            ▼
┌─────────────────────────────────────────┐
│ Extract first intermediate feature from  │
│ input data using first convolution kernel│ ～ 410
│ having first size                         │
└─────────────────────────────────────────┘
            │
            ▼
┌─────────────────────────────────────────┐
│ Extract sub-intermediate features from   │
│ first intermediate feature using          │
│ sub-convolution kernels having various    │ ～ 420
│ sizes based on second convolution kernel  │
│ having second size                        │
└─────────────────────────────────────────┘
            │
            ▼
┌─────────────────────────────────────────┐
│ Determine output data based on weighted  │
│ sum of first intermediate feature and    │ ～ 430
│ sub-intermediate features                 │
└─────────────────────────────────────────┘
            │
            ▼
        ( End )
```

# FIG. 4

Input data
501

↓

```
┌─────────────────────────────┐
│    First convolution layer   │
│             510              │
└─────────────────────────────┘
```

```
┌──────────────────────┐  ┌──────────────────────┐  ┌──────────────────────┐
│ First sub-convolution │  │ Second sub-convolution│  │ Third sub-convolution │
│        layer          │  │        layer          │  │        layer          │
│         521           │  │         522           │  │         523           │
└──────────────────────┘  └──────────────────────┘  └──────────────────────┘
```

```
┌─────────────────────────────┐
│     Merging operation        │
│             530              │
└─────────────────────────────┘
```

↓

Output data
531

# FIG. 5

```
            ┌─────────┐
            │  Start  │
            └────┬────┘
                 │
                 ▼
┌──────────────────────────────────────────────────┐
│  Generate BEV feature by compressing global feature │ ─── 610
└──────────────────────────┬───────────────────────┘
                           │
                           ▼
┌──────────────────────────────────────────────────┐
│            Generate updated BEV feature            │
│  by performing convolution processing based on BEV feature │ ─── 620
└──────────────────────────┬───────────────────────┘
                           │
                           ▼
┌──────────────────────────────────────────────────┐
│    Generate merged feature by merging global feature with  │
│                   updated BEV feature              │ ─── 630
└──────────────────────────┬───────────────────────┘
                           │
                           ▼
                      ┌─────────┐
                      │   End   │
                      └─────────┘
```

FIG. 6

Global feature
701

→ Merging
730

→ Merged feature
731

Compression
710

BEV feature
711

Convolution
720

→ Updated
BEV feature
721

FIG. 7

Input data
801

Output data
851

```
Data processing
810
```

```
Prediction head
850
```

```
Downsampling
820
```

```
Upsampling
840
```

```
Global feature
extraction 831
```

```
Feature merging
832
```

FIG. 8

Upsampled feature
902

Spatial aggregation
95n

n-th upsampling
94n

Input feature
901

First downsampling
911

Spatial aggregation
95n-1

n-1th upsampling
94n-1

Second downsampling
912

Spatial aggregation
951

n-th downsampling
91n

First upsampling
941

Downsampled
feature
921

Global feature extraction
931

Feature merging
932

Merged feature
931

FIG. 9

Start

Generate augmented point cloud data
by augmenting point cloud data — 1010

Generate voxel data by voxelizing augmented point cloud data — 1020

Train semantic segmentation model based on loss function — 1030

End

FIG. 10

1100

1110

One or more
processors

1120

Memory

1160

1130

Storage

1140

I/O device

1150

Network
interface

FIG. 11

## EUROPEAN SEARCH REPORT

**Application Number**

EP 25 20 5122

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN QIUXIAO ET AL: "Residual Graph Convolutional Network for Bird's-Eye-View Semantic Segmentation", 2024 IEEE/CVF WINTER CONFERENCE ON APPLICATIONS OF COMPUTER VISION (WACV), IEEE, 3 January 2024 (2024-01-03), pages 3312-3319, XP034583294, DOI: 10.1109/WACV57701.2024.00329 [retrieved on 2024-04-09] * abstract * * figures 1, 2, 3 * * "III. Method" section; page 3314 - page 3316 * ----- | 1-15 | INV. G06T7/11 G06T7/174 G06V10/82 G06V20/64 |
| A | FERNANDES DUARTE ET AL: "Point-cloud based 3D object detection and classification methods for self-driving applications: A survey and taxonomy", INFORMATION FUSION, ELSEVIER, US, vol. 68, 19 November 2020 (2020-11-19), pages 161-191, XP086428606, ISSN: 1566-2535, DOI: 10.1016/J.INFFUS.2020.11.002 [retrieved on 2020-11-19] * the whole document * ----- | 1-15 | |
| | | | TECHNICAL FIELDS SEARCHED (IPC) |
| | | | G06T G06F G06V |
| A | WU YUTIAN ET AL: "Deep 3D Object Detection Networks Using LiDAR Data: A Review", IEEE SENSORS JOURNAL, IEEE, vol. 21, no. 2, 31 August 2020 (2020-08-31), pages 1152-1171, XP011826761, ISSN: 1530-437X, DOI: 10.1109/JSEN.2020.3020626 [retrieved on 2020-12-17] * the whole document * ----- | 1-15 | |

The present search report has been drawn up for all claims

| Place of search | Date of completion of the search | Examiner |
|---|---|---|
| Munich | 13 February 2026 | Rodes Arnau, Isabel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)